# EUROPÄISCHE PATENTSCHRIFT

(11) **EP 2 386 405 B1**
(45) Veröffentlichungstag und Bekanntmachung des Hinweises auf die Patenterteilung: **17.04.2013**
(21) Anmeldenummer: 11164272.4
(22) Anmeldetag: 29.04.2011
(51) Int. Cl.: B29C 67/00, B22F 3/105

(54) **Vorrichtung zum generativen Herstellen eines dreidimensionalen Objekts mit Baufeldbegrenzung**
Device for generative manufacturing of a three dimensional object with restricted construction area
Dispositif de fabrication générative d'un objet tridimensionnel avec une délimitation du champ de construction

(30) Priorität: 12.05.2010 DE 102010020418; 14.05.2010 US 334836 P
(43) Veröffentlichungstag der Anmeldung: 16.11.2011
(73) Patentinhaber: EOS GmbH Electro Optical Systems, 82152 Krailling (DE)
(72) Erfinder: Baumann, Andreas, 82166, Gräfelfing (DE); Bokodi, Attila, 85560, Ebersberg (DE)
(74) Vertreter: Hofer, Dorothea

(56) Entgegenhaltungen:
- DE-A1-102007 029 052
- DE-A1-102007 047 326
- US-A1- 2005 280 185

## Beschreibung

Die vorliegende Erfindung bezieht sich auf eine Vorrichtung zum generativen Herstellen eines dreidimensionalen Objekts.

DE 199 37 260 B4 beschreibt eine als Lasersinteranlage ausgeführte, bekannte Vorrichtung zum generativen Herstellen eines dreidimensionalen Objekts, mit einem Rahmen, dessen oberer Abschnitt ein Baufeld umschließt; einem Träger, der in dem Rahmen angeordnet ist und durch eine Hubmechanik zumindest unterhalb des Baufelds vertikal bewegbar ist; einer Verfestigungsvorrichtung, die einen Energiestrahl erzeugt, der durch eine Ablenkeinrichtung auf beliebige Punkte in dem Baufeld fokussiert wird, um in dem Baufeld befindliches Pulvermaterial selektiv zu sintern oder zu schmelzen; und einem Beschichter zum Auftragen einer Schicht eines Pulvermaterials auf den Träger oder eine zuvor aufgebrachte Schicht des Pulvermaterials. Das Herstellungsverfahrens dieser Vorrichtung hat die folgenden Schritte: a) Schichtweises Auftragen eines Pulvermaterials auf dem Träger der Vorrichtung oder auf eine zuvor aufgetragene Schicht nach vorherigem Absenken des Trägers um den Betrag einer Schichtdicke; b) Verfestigen des Pulvermaterials durch energiehaltige Strahlung an Stellen, die dem Objekt entsprechen, c) Wiederholen der Schritte a) und b), bis das Objekt fertig gestellt ist.

Im oberen Abschnitt des Rahmens ist ein zweidimensionales, maximales Baufeld mit einer maximalen Länge und einer maximalen Breite definiert, in dem das Pulvermaterial aufgetragen und bestrahlt werden kann. In vertikaler Richtung bestimmt die Höhe des größten Objekts die minimale Höhe pro Bauvorgang. Aus den drei Maßen, nämlich der maximalen Länge, der maximalen Breite und der minimalen Höhe pro Bauvorgang ergibt sich das Mindestbauvolumen, und mit den Pulverbett- und Bauteildichten lässt sich die Menge des erforderlichen Pulvermaterials errechnen.

Wenn nur eine geringe Menge an Pulvermaterial vorliegt oder der Materialeinsatz aus Kostengründen gering gehalten werden muss, ist bei einer großen Fläche des Trägers nur eine sehr geringe Höhe des Bauvorgangs möglich. Die Situation wird insbesondere dadurch verschärft, dass das nicht-verfestigte Pulvermaterial nur teilweise oder manchmal auch gar nicht wieder verwendet werden kann. Ein Bauvorgang mit einer großen vertikalen Höhe führt dann zu großen Abfallmengen, insbesondere wenn die Objekte nicht günstig im Rahmen bzw. Baubehälter angeordnet werden können. Üblicherweise kann das verbrauchte Pulver nur zum Teil wieder verwendet werden.

Weitere Vorrichtungen zum generativen Herstellen von dreidimensionalen Objekten sind jeweils aus DE 10 2007 029 052 A1; DE 10 2007 047 326 A1 und US 2005/280185 A1 bekannt.

Es ist die Aufgabe der vorliegenden Erfindung, eine Vorrichtung zum generativen Herstellen eines dreidimensionalen Objekts vorzusehen, mit denen eine größere Flexibilität bei der Verwendung der Vorrichtung sowie eine wirtschaftliche Nutzung des Pulvers bei kleinen Objekten und bei der Verarbeitung von kostenintensiven und nicht-recycelbaren Pulvermaterialien ermöglicht werden. Außerdem soll es möglich sein, die Entwicklung von Pulvermaterialien auch für große Vorrichtungen flexibel und wirtschaftlich zu gestalten. Diese Aufgabe wird durch die Vorrichtung mit den Merkmalen des Anspruchs 1 gelöst. Vorteilhafte Weiterbildungen sind Gegenstand der Unteransprüche.

Die Erfindung hat den Vorteil, dass auch kleine Objekte in einer großen Lasersinteranlage wirtschaftlich hergestellt werden können, da nur die minimal benötigte Pulvermenge eingesetzt wird. Darüber hinaus ergibt sich die Möglichkeit, mit wenig Pulvermaterial den Bauprozess unter den thermischen Bedingungen einer großen Lasersinteranlage zu untersuchen. Insbesondere bietet sich die Anwendung der Erfindung bei PAEK-Pulvern, wie z.B. PEEK, PEKK, etc, als Baumaterial an. Gerade diese Polymerpulver, die, nicht nur aufgrund der hohen Temperaturstabilität, zu vielversprechenden Eigenschaften der hergestellten Objekte führen, sind nur sehr eingeschränkt recycelbar und darüberhinaus zur Zeit noch ziemlich teuer.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Ansicht einer Vorrichtung zum Herstellen eines dreidimensionalen Objekts;
- Fig. 2: eine schematische Draufsicht des maximalen Baufelds und des sich darin befindlichen reduzierten Baufelds gemäß einem Ausführungsbeispiel der vorliegenden Erfindung; und
- Fig. 3: eine schematische Querschnittsansicht der Vorrichtung zum Herstellen eines dreidimensionalen Objekts mit reduziertem Baufeld.

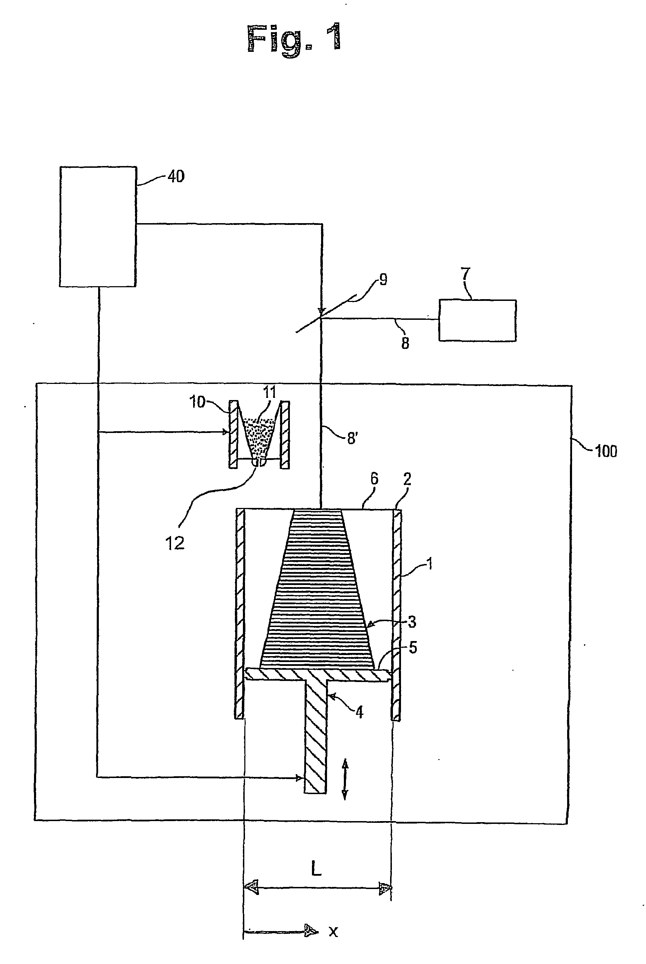

Die Fig. 1 zeigt eine schematische Ansicht einer Vorrichtung zum Herstellen eines dreidimensionalen Objekts 3, die exemplarisch als Lasersintervorrichtung ausgebildet ist.

Die Lasersintervorrichtung weist einen nach oben hin offenen Rahmen 1 mit einem darin befindlichen, in vertikaler Richtung bewegbaren Träger 5 auf, der das herzustellende dreidimensionale Objekt 3 trägt. Der obere Abschnitt 2 des Rahmens umschließt ein Baufeld 6. Vorzugsweise bilden der Rahmen 1 und der Träger 5 einen austauschbaren Wechselrahmen, der der Lasersintervorrichtung entnommen werden kann. Der Träger 5 ist mit einer Hubmechanik 4 in Verbindung, die ihn zumindest unterhalb der Ebene des Baufelds 6 in vertikaler Richtung so verfährt, dass die Oberseite einer jeweils zu verfestigenden Pulverschicht in der Ebene des Baufelds 6 liegt.

Des Weiteren ist ein Beschichter 10 zum Aufbringen einer Schicht eines Pulvermaterials 11 vorgesehen. Als Pulvermaterial 11 können alle lasersinterbaren Pulver verwendet werden, wie zum Beispiel Pulver aus Kunststoff, Metallen, Keramiken, Formsand und Verbundmaterialien. Insbesondere kann das Pulver ein PAEK-Polymerpulver enthalten. Als metallhaltiges Pulvermaterial kommen beliebige Metalle und deren Legierungen sowie Mischungen mit metallischen Komponenten oder mit nichtmetallischen Komponenten in Frage.

Der Beschichter 10 wird in einer vorbestimmten Höhe über dem Baufeld 6 verfahren, so dass die Schicht des Pulvermaterials 11 mit einer definierten Höhe über dem Träger 5 bzw. über der zuletzt verfestigten Schicht liegt.

Die Vorrichtung weist des Weiteren eine Verfestigungsvorrichtung in Gestalt eines Lasers 7 auf, der einen Laserstrahl 8, 8' erzeugt, der durch eine Ablenkeinrichtung 9 auf beliebige Punkte in dem Baufeld 6 fokussiert wird. Dadurch kann der Laserstrahl 8, 8' das Pulvermaterial 11 an jenen Stellen selektiv schmelzen und verfestigen bzw. sintern, die dem Querschnitt des herzustellenden Objekts 3 entsprechen.

Die Lasersintervorrichtung kann eine Heizvorrichtung (nicht gezeigt) oberhalb des Baufelds 6 aufweisen, um eine frisch aufgetragene Pulverschicht auf eine Temperatur in der Nähe der zur Verfestigung notwendigen Prozesstemperatur des Pulvermaterials 11 vorzuheizen.

Mit dem Bezugszeichen 100 ist ein Gehäuse bezeichnet, in dem der Rahmen 1, der Träger 5 und der Beschichter 10 angeordnet sind. Vorzugsweise ist das Gehäuse gasdicht ausgebildet und hat im oberen Bereich einen Einlass zur Einleitung des Laserstrahls 8, 8'. Vorzugsweise wird ein Schutzgas in das Gehäuse 100 eingeführt. Es ist ferner eine Steuereinheit 40 vorgesehen, über die die Vorrichtung in koordinierter Weise zum Durchführen des Bauprozesses und zum Steuern des Energieeintrags durch den Laser 7 gesteuert wird. Die Steuereinheit 40 nutzt zur Herstellung des Objekts 3 Datensätze des Objekts 3, die die Geometrie des Objekts 3 definieren, wie zum Beispiel CAD-Daten.

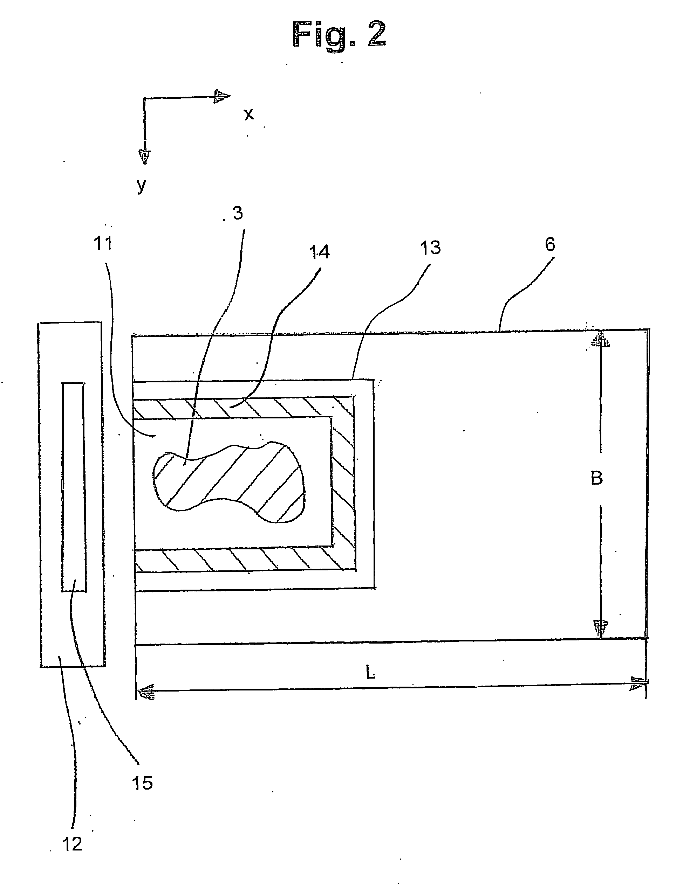

Das Baufeld 6 ist in der Fig. 1 in der Seitenansicht gezeigt, und die Fig. 2 zeigt eine schematische Draufsicht des Baufelds 6, das im Folgenden als maximales Baufeld 6 bezeichnet wird und eine maximale Länge L und eine maximale Breite B hat, in dem das Pulvermaterial 11 aufgetragen und bestrahlt werden kann. Der Beschichter 10 ist diesbezüglich in der Richtung x entlang der maximalen Länge L des maximalen Baufelds 6 verfahrbar.

Falls kleine Objekte 3 hergestellt werden und nicht die maximale Breite B des Baufelds 6 genutzt werden soll, kann der Beschichter 10 mit einem mechanischen Einsatz 12 versehen sein, der in der Fig. 2 lediglich schematisch angedeutet ist und das Auftragen des Pulvermaterials 11 auf weniger als die maximale Breite B des maximalen Baufelds 6 begrenzt. Vorzugsweise hat der mechanische Einsatz 12 eine Öffnung 15 zum Auftragen des Pulvermaterials 11, deren Länge in y-Richtung kleiner ist als die maximale Breite B des maximalen Baufelds 6. Dadurch wird ein in y-Richtung reduziertes Baufeld 13 definiert, wie es in der Fig. 2 als Beispiel gezeigt ist. Vorzugsweise ist der mechanische Einsatz 12 austauschbar an dem Beschichter 10 vorgesehen.

Bei dem Betrieb der Vorrichtung wird in einem ersten Schritt der Träger 5 durch die Hubmechanik 4 soweit abgesenkt, bis seine obere Seite um die gewünschte Dicke einer ersten Pulverschicht unterhalb der Ebene des Baufelds 6 liegt. Dann wird durch den Beschichter 10 eine erste Schicht des Pulvermaterials 11 auf den Träger 5 aufgebracht und geglättet.

Das Verfahren zum generativen Herstellen eines dreidimensionalen Objekts in der Vorrichtung der Erfindung hat eine normale Betriebsweise, bei der das Pulvermaterial 11 innerhalb des maximalen Baufelds 6 aufgetragen und bestrahlt wird. Das Verfahren hat außerdem eine spezielle Betriebsweise mit reduziertem Baufeld 13, bei der das Pulvermaterial 11 in einem Bereich mit geringerer Länge als die maximale Länge L und, bei Verwendung des Einsatzes 12, auch mit geringerer Breite als die maximale Breite B des maximalen Baufelds 6 aufgetragen und bestrahlt wird.

Falls kleine Objekte 3 hergestellt werden und nicht die maximale Länge L des Baufelds 6 genutzt werden soll, kann also der Beschichter 10 das Pulvermaterial 11 in x-Richtung in einem Bereich mit gegenüber der maximalen Länge L des Baufelds 6 verringerten Länge auftragen, d.h. der Beschichter 10 kehrt seine Bewegungsrichtung um, bevor die maximale Länge L des Baufelds 6 erreicht wird. Dadurch wird das reduzierte Baufeld 13 in x-Richtung verkleinert, wie es in der Fig. 2 als Beispiel gezeigt ist. Strukturell wird die Begrenzung des reduzierten Baufelds 13 in x-Richtung zum Beispiel durch die Steuereinheit 40 verwirklicht, die als Baufeldbegrenzungsvorrichtung 40 dient und so programmiert ist, dass der Beschichter 10 nicht über die volle Distanz L in x-Richtung bewegt wird, sondern in x-Richtung nur bis zum Rand des reduzierten Baufelds 13.

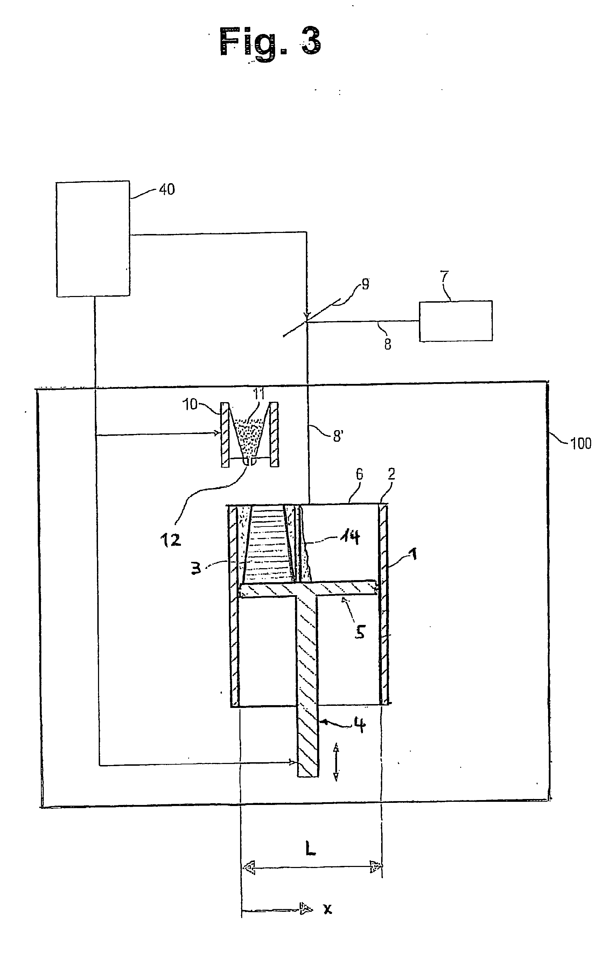

Da sich das reduzierte Baufeld 13 nicht bis zu den Wänden des Rahmens 1 erstreckt, die das aufgetragene Pulvermaterial 11 vor dem Verfestigen halten, findet der Bauvorgang in einer Schichtstruktur aus nicht-verfestigtem Pulvermaterial statt. Überraschenderweise wurde gefunden, dass infolge der üblicherweise zwischen den Pulverpartikeln vorhandenen Adhäsionskräfte dabei sogar Böschungswinkel von annähernd 90° realisierbar sind, sodass trotz fehlender Begrenzungswände Objekte mit beliebiger dreidimensionaler Form realisierbar sind. Figur 2 und 3 zeigen eine besondere Ausführungsform der Erfindung. Hierbei werden zusätzlich zum dreidimensionalen Objekt 3 während des Lasersinterprozesses Stützwände 14 hergestellt, die um das Objekt 3 herum verlaufen und verhindern, dass das aufgetragene Pulver 11 aus dem reduzierten Baufeld 13 heraus tritt.

Vorzugsweise ist das reduzierte Baufeld 13 im Wesentlichen bündig mit jener Seite des maximalen Baufelds 6, an der der Beschichter 10 in das Baufeld 6 eintritt, da der Beschichtungsvorgang nicht in der Mitte des Baufelds 6 beginnen kann, wenn er kontinuierlich stattfindet von einer Beschichterfüllstation außerhalb des Baufelds 6.

Ein Bauvorgang unter Verwendung der speziellen Betriebsweise mit reduziertem Baufeld läuft folgendermaßen ab:
Nachdem das Pulvermaterial 11 aufgetragen wurde, kann es an den gewünschten Stellen verfestigt werden. Falls die Heizvorrichtung vorgesehen ist, kann durch die Heizvorrichtung die Temperatur des obersten Pulvermaterials 11 global auf wenige °C unterhalb der zur Verfestigung notwendigen Prozesstemperatur gebracht werden. Anschließend steuert dann die Steuereinheit 40 die Ablenkeinrichtung 9 derart, dass der abgelenkte Laserstrahl 8, 8' selektiv an den Stellen der Schicht des Pulvermaterials 11 auftrifft, die verfestigt werden sollen. Dadurch wird an diesen Stellen das Pulvermaterial 11 verfestigt bzw. gesintert, so dass hier das dreidimensionale Objekt 3 und ggf. die Stützwände 14 entstehen.

In einem nächsten Schritt wird dann der Träger 5 durch die Hubmechanik 4 um die gewünschte Dicke der nächsten Schicht abgesenkt. Durch den Beschichter 10 wird eine zweite Pulvermaterialschicht aufgetragen, geglättet und mittels des Laserstahls 8, 8' selektiv verfestigt. Diese Schritte werden so oft durchgeführt, bis das gewünschte Objekt 3 und ggf. die Stützwände 14 hergestellt sind.

Da die Steuereinheit 40 zur Herstellung des Objekts 3 zum Beispiel CAD-Datensätze des Objekts 3 nutzt, die die Geometrie des Objekts 3 definieren, sollten, sofern erforderlich, die Datensätze um die CAD-Daten der Stützwände 14 ergänzt werden. Dabei wird zunächst in herkömmlicher Weise ein Datensatz erstellt, der die Geometrie bzw. die Maße des fertig gestellten dreidimensionalen Objekts 3 definiert. Im Nachgang wird der Datensatz mit Daten ergänzt, die die Geometrie bzw. die Maße der Stützwände 14 definieren. Dadurch können die Stützwände 14 gleichzeitig mit dem eigentlichen Objekt 3 durch die Lasersinteranlage hergestellt werden.

Der Schutzumfang beschränkt sich nicht auf die dargestellten Ausführungsbeispiele, sondern er umfasst weitere Änderungen und Abwandlungen, sofern diese innerhalb des durch die beigefügten Ansprüche definierten Umfangs fallen.

Im dargestellten Ausführungsbeispiel werden ein rechteckiges maximales Baufeld 6 sowie ein rechteckiges reduziertes Baufeld 13 beschrieben. Die Erfindung ist jedoch nicht auf diese Formen beschränkt, da die Baufelder 6, 13 die verschiedensten Formen annehmen können, das Baufeld 6 zum Beispiel Rechtecke mit abgerundeten Ecken. Die Baufelder 6, 13 können auch kreisförmig sein, wobei in diesem Fall die maximale Länge und die maximale Breite des Baufelds dem Durchmesser des Kreises entsprechen. Es sind auch ovale Baufelder 6 möglich. Im Allgemeinen ist die Form des reduzierten Baufelds 13 nicht an die Form des maximalen Baufelds 6 oder an die Form des oberen Abschnitts 2 des Rahmens 1 gebunden. In Abhängigkeit von der Art der Beschichtung sind verschiedenartige Formen des reduzierten Baufelds 13 denkbar. Bei Vorrichtungen, die zum Beispiel einen kreisförmigen Querschnitt des Rahmens 1 aufweisen, kann das reduzierte Baufeld 13 bei linearer Beschichtung auch die Form eines Kreissegments oder bei rotierender Beschichtung eine Kreisform mit gegenüber dem Rahmen 1 verringertem Radius haben.

Im dargestellten Ausführungsbeispiel werden die Stützwände 14 gleichzeitig mit dem Objekt 3 durch denselben Herstellungsprozess hergestellt.
Die erfindungsgemäße Vorrichtung ist nicht nur beim Lasersintern anwendbar, sondern auf alle pulverbasierten, generativen Verfahren, bei denen pro aufzutragender Schicht ein Werkstoff bzw. ein Pulvermaterial verwendet wird, welches zum Beispiel durch die energiehaltige Strahlung verfestigt wird. Die energiehaltige Strahlung muss nicht unbedingt ein Laserstrahl 8' sein, sondern sie kann zum Beispiel auch ein Elektronenstrahl oder ein Partikelstrahl sein. Ebenfalls ist eine ganzflächige Bestrahlung, zum Beispiel durch eine Maske, möglich. Anstelle der energiehaltigen Strahlung kann auch ein Kleber bzw. Binder auf den gewünschten Stellen aufgebracht werden, der das Pulvermaterial selektiv verklebt.

## Patentansprüche

1. Vorrichtung zum generativen Herstellen eines dreidimensionalen Objekts (3), mit:
einem Rahmen (1), dessen oberer Abschnitt (2) ein Baufeld (6) umschließt;
einem Träger (5), der in dem Rahmen (1) angeordnet ist und durch eine Hubmechanik (4) zumindest unterhalb des Baufelds (6) vertikal bewegbar ist;
einem Beschichter (10) zum Auftragen einer Schicht eines Pulvermaterials (11) auf den Träger (5) oder eine zuvor aufgebrachte Schicht des Pulvermaterials (11) in dem Baufeld (6);
einer Verfestigungsvorrichtung (7), die in dem Baufeld (6) befindliches Pulvermaterial (11) an jenen Stellen selektiv verfestigen kann, die dem Querschnitt des Objekts (3) in der aufgetragenen Schicht entsprechen; wobei das Baufeld (6) ein zweidimensionales, maximales Baufeld (6) mit einer maximalen Länge (L), über die der Beschichter (10) des Baufelds (6) verfahrbar ist, und einer maximalen Breite (B) ist, über die der Beschichter (10) das Pulvermaterial (11) auftragen kann; **dadurch gekennzeichnet, dass** die Vorrichtung eine Baufeldbegrenzungsvorrichtung (40) aufweist, die den Verfahrweg des Beschichters (10) auf weniger als die maximale Länge (L) des maximalen Baufelds (6) begrenzt, so dass ein reduziertes Baufeld (13) definiert wird.

2. Vorrichtung gemäß Anspruch 1, wobei der Beschichter (10) einen mechanischen Einsatz (12) aufweist, der das Auftragen des Pulvermaterials (11) auf weniger als die maximale Breite (B) des maximalen Baufelds (6) begrenzt.

3. Vorrichtung gemäß Anspruch 2, wobei der mechanische Einsatz (12) eine Öffnung (15) aufweist, deren Breite in Richtung der maximalen Breite (B) des Baufelds (6) kleiner ist als die maximale Breite (B) des maximalen Baufelds (6).

4. Vorrichtung gemäß Anspruch 2 oder 3, wobei der mechanische Einsatz (12) austauschbar an dem Beschichter (10) vorgesehen ist.

## Claims

1. Device for generatively manufacturing a three-dimensional object (3), comprising:
a frame (1), the upper portion (2) thereof surrounds a working field (6);
a support (5) which is arranged in the frame (1) and is vertically movable by a lifting mechanics (4) at least below the working field (6);
a recoater (10) for applying a layer of a powdery material (11) onto the support (5) or a previously applied layer of the powdery material (11) in the working field (6);
a solidifying device (7) which can selectively solidify the powdery material (11) being present in the working field (6) at locations corresponding to the cross - section of the object (3) in the applied layer; wherein the working field (6) is a two-dimensional maximum working field (6) having a maximum length (L), in which the recoater (10) is movable over the working field (6), and a maximum width (B), in which the application device (10) can apply the powdery material (11); and
the recoater (10) comprises a mechanical insert (12) which limits the application of the powdery material (11) to less than the maximum width (B) of the maximum working field (6), and/or the device comprises a working field limitation device (40) which limits the movement path of the recoater (10) to less than the maximum length (L) of the maximum working field (6) so that a reduced working field (13) is defined.

2. Device according to claim 1, wherein the mechanical insert (12) comprises an opening (15), the width thereof in a direction of the maximum width (B) of the working field (6) is smaller than the maximum width (B) of the maximum working field (6).

3. Device according to anyone of the proceeding Claims, wherein the mechanical insert (12) is replaceable provided at the recoater (10).

4. Device according to claim 2 or 3 wherein the mechanical insert (12) is provided exchangeably on the recoater (10).

## Revendications

1. Dispositif pour la fabrication générative d'un objet (3) tridimensionnel, comprenant:
un cadre (1), la partie supérieure (2) entourant celui-ci un champ de travail (6);
un support (5) qui est disposé dans le bâti (1) et est mobile verticalement par un mécanisme de levage (4) au moins au dessous du champ de travail (6);
un racleur (10) pour appliquer une couche d'un matériau pulvérulent (11) sur le support (5) ou une couche préalablement appliquée de la matière pulvérulente (11) sur le champ de travail (6);
un dispositif de solidification (7) qui peut sélectivement solidifier la matière pulvérulente (11) étant présent dans le champ de travail (6) à des emplacements correspondant à la section transversale de l'objet (3) sur la couche appliquée, où le champ de travail (6) est un maximum de champ à deux dimensions de travail (6) ayant une longueur maximale (L), dans lequel le racleur (10) est mobile au-dessus du champ de travail (6), et une largeur maximale (B), dans laquelle le racleur (10) peut appliquer le matériau pulvérulent (11), et le dispositif d'application (10) comprend une insertion mécanique (12) qui limite l'application de la matière pulvérulente (11) à moins de la largeur maximale (B) du champ de travail (6), et / ou le dispositif comprend un dispositif de limitation de champ de travail (40) qui limite la trajectoire de déplacement du racleur (10) à moins de la longueur maximale (L) du champ de travail maximale (6) de sorte qu'un champ de travail réduite (13) est défini.

2. Dispositif selon la revendication 1, dans lequel l'insertion mécanique (12) comporte une ouverture (15), la largeur de celui-ci dans une direction de la largeur maximale (B) de la zone de travail (6) est plus petite que la largeur maximale (B) de la valeur maximale de champ de travail (6).

3. Dispositif selon une quelconque des revendications précédentes,
dans lequel insertion mécanique (12) est remplaçable fournie à le dispositif d'application (10).

4. Dispositif selon la revendication 2 ou 3, dans lequel l'insert mécanique (12) est prévu de manière échangeable sur le racleur (10).
